Europäisches Patentamt

(19) European Patent Office

Office européen des brevets

(11) Numéro de publication: **0 213 012**
**B1**

(12) **FASCICULE DE BREVET EUROPEEN**

(45) Date de publication du fascicule du brevet:
16.08.89

(51) Int. Cl.⁴: **C 02 F 3/30, B 01 J 8/20**

(21) Numéro de dépôt: **86401586.2**

(22) Date de dépôt: **16.07.86**

(54) Réacteur à lit fluidisé pour traitement biologique de l'eau.

(30) Priorité: 09.08.85 FR 8512236
01.07.86 FR 8609523

(43) Date de publication de la demande:
04.03.87 Bulletin 87/10

(45) Mention de la délivrance du brevet:
16.08.89 Bulletin 89/33

(84) Etats contractants désignés:
BE CH DE GB IT LI

(56) Documents cités:
EP-A- 0 090 450
DE-A- 2 421 935
GB-A- 2 032 904
US-A- 2 188 673
US-A- 3 525 436
US-A- 3 997 634
US-A- 4 221 653

P.F. COOPER et al.: "Biological fluidised bed treatment of water and wastewater", 1ère édition, 1981, page 362, Water Research Centre/Ellis Horwood Ltd, Chichester, GB;

(73) Titulaire: "DEGREMONT" Société dite:, 183, Avenue du 18 Juin 1940, F-92508 Rueil-Malmaison Cédex (FR)

(72) Inventeur: **Durot, Jean, 18, rue Francine,**
F-78450 Villepreux (FR)
Inventeur: **Prevot, Claude, rue du Belvédère de la Ronce,**
F-92410 Ville d'Avray (FR)

(74) Mandataire: **Armengaud, Charles, Cabinet ARMENGAUD AINE 3, Avenue Bugeaud, F-75116 Paris (FR)**

## Description

L'invention concerne les réacteurs à lit fluidisé de matériau granulaire utilisés pour le traitement biologique de fluides et plus particulièrement d'eau, par voie aérobie ou anaérobie, et dans lesquels le fluide à traiter s'écoule du bas vers le haut de l'appareil.

Il est maintenant bien établi que la technique des réacteurs biologiques à lit fluidisé présente de nombreux avantages par rapport aux techniques traditionnelles des réacteurs à cultures libres ou à cultures immobilisées sur lits fixes: ils permettent d'obtenir un meilleur contact de l'eau à épurer et de la masse bactérienne et d'atteindre des charges volumiques bien supérieures, grâce à une très grande surface spécifique du matériau granulaire.

De nombreux réacteurs de ce type ont déjà été décrits; cependant le développement de ces appareils se heurte à des difficultés concernant en particulier l'introduction et la répartition homogène des fluides dans le lit de matériau granulaire ainsi que le désenrobage, la séparation et le recyclage du matériau.

Certains de ces appareils connus comportent des dispositifs permettant de pallier partiellement certains de ces incovénients, par exemple des dispositifs d'injection du liquide à traiter en plusieurs points à la base du réacteur, tels que décrits dans les brevets US 4 202 774 ou européen 0 090 450. Ces dispositifs présentent des risques d'obstruction des orifices d'alimentation et ne comportent pas d'introduction de gaz dans le réacteur lui-même, le gaz de traitement étant généralement mélangé au liquide à traiter préalablement à l'introduction de ce dernier dans le réacteur.

La Demanderesse a elle-même déjà écrit dans son brevet N. 8 409 235 (FR-A-2 565 961) un réacteur à lit fluidisé dans lequel l'eau à traiter est introduite à grande vitesse dans une couche de matériau granulaire dont la mise en mouvement assure le transfert de cette eau dans une seconde couche de matériau et la fluidisation de celle-ci. Le lavage et le recyclage en matériau granulaire y sont effectués au moyen d'un dispositif extérieur à l'appareil.

Cependant, la technologie de ces appareils connus n'est pas toujours bien adaptée au cas où se trouve présent dans le réacteur le mélange triphasique constitué par le liquide à traiter, le gaz de traitement, par exemple air, oxygène ou air enrichi en oxygène, ou le gaz formé, méthane par exemple, et le matériau granulaire.

On a maintenant défini, suivant l'invention, un réacteur à lit de matériau granulaire fluidisé dans lequel peut être effectué un traitement biologique aérobie ou anaérobie et qui permet de remédier aux difficultés rencontrées pour l'introduction des fluides, la fluidisation du matériau granulaire, le dégazage, la séparation et la reprise de l'effluent traité, ce réacteur suivant l'invention étant particulièrement bien adapté au fait que l'on opère en présence d'un gaz et que l'on se trouve de ce fait en présence d'un mélange triphasique à l'intérieur de l'appareil.

on a en effet réussi à dominer les contraintes qu'apporte la présence de ce mélange triphasique dans l'appareil, à savoir la turbulence provoquée par le gaz avec entraînement des fines de matériau granulaire et à bénéficier des possibilités qu'elle engendre dues à l'allègement des particules et aux effets de gaz-lift créés dans l'appareil.

La présente invention consiste en un réacteur à lit fluidisé de matériau granulaire dans lequel le liquide à traiter par voie aérobie ou anaérobie s'écoule de bas en haut à travers le lit de matériau granulaire, ledit réacteur, comportant des moyens pour effectuer le dégazage du mélange triphasique présent et la séparation par décantation des grains de matériau avec recyclage de ce matériau dans la zone de fluidisation ainsi que des moyens pour recycler dans cette zone le débit liquide assurant la fluidisation et des moyens pour la reprise du liquide traité, étant caractérisé en ce qu'il est muni, à sa base, de moyens pour l'introduction du ou des fluide(s), comportant au moins un orifice d'introduction du ou des fluide(s) libérant un jet sur au moins une plaque horizontale munie d'une membrane souple formant clapet et, à sa partie supérieure, de moyens pour effectuer le désenrobage du matériau granulaire entraîné par le gaz introduit et/ou généré dans l'appareil.

Suivant une disposition de l'invention, les moyens pour l'introduction des fluides à la base du réacteur consistent en au moins une capacité d'entrée comportant une tubulure axiale verticale guidant le flux contre la plaque horizontale de déviation du jet fluide, entourée de la membrane souple formant clapet. Des orifices sont avantageusement ménagés dans cette tubulure pour l'introduction de gaz par l'intermédiaire de cette capacité d'entrée.

Cette disposition de l'invention est de préférence utilisée en traitement anaérobie sous la forme d'une capacité unique pour un réacteur cylindrique à fond tronconique, jusqu'à 3 ou 4 m de diamètre par exemple, ou d'une pluralité de capacités d'injection réparties sur le fond plat d'un réacteur de grandes dimensions.

Suivant une variante de l'invention, plus particulièrement adaptée aux réacteurs aérobies à fond plat, la ou les capacité(s) d'entrée comportant une tubulure d'injection surmontée d'une plaque horizontale de déviation de jet munie d'une membrane souple est (sont) associée(s) à des collecteurs à orifices adaptés pour la diffusion de gaz, air, oxygène ou air enrichi en ocygène, disposés au-dessus des plaques horizontales de déviation de jet liquide, cette disposition permettant d'éviter tout retour d'eau aérée dans la capacité d'injection et donc d'éviter les risques d'entartrage par dépôts de carbonates. En outre, les effets réguliers d'air-lift créés par l'introduction répartie au-dessus des plaques horizontales assurent une stabilisation homogène des flux hydrauliques, ce qui permet de limiter à un petit nombre les points d'introduction d'eau.

Suivant une autre disposition de l'invention en traitement aérobie, les moyens pour l'introduction des fluides à la base du réacteur consistent en une pluralité de buses d'équirépartition du liquide à traiter comportant des orifices, libérant le jet liquide vertical sur une plaque horizontale, orifices protégés par une membrane souple déformable s'appliquant sur le fond du réacteur de façon étanche en cas d'interruption de l'alimentation et assurant ainsi un effet clapet interdisant tout retour dans la buse de fluide ou de matériau, ces buses d'introduction de liquide étant associées à un dispositif de diffusion d'air consistant en des coffres à air disposés au-dessous des buses d'injection de liquide et comportant des orifices calibrés d'équirépartition et munis, comme connu, de membranes souples déformables, perforées ou poreuses, assurant la diffusion de l'air en très fines bulles au niveau de l'injection du liquide.

Suivant l'invention, les moyens pour effectuer le désenrobage du matériau granulaire entraîné par le gaz, le dégazage du mélange triphasique et la séparation par décentation des grains de matériau consistent en la disposition à la partie supérieure du réacteur d'au moins un ensemble de trois enceintes successives, de dimensionnement bien défini et dans lesquelles les vitesses de passage des fluides sont régulées et contrôlées:

- La première enceinte de désenrobage consiste en au moins un tube de transfert à diaphragme(s) réglable(s) créant un effet de laminage, disposé(s) à l'intérieur ou à l'extérieur de l'appareil. La turbulence induite dans ce tube, ou ces tubes de transfert du mélange triphasique, au moyen de dispositifs déprimogènes, facilite la coalescence des bulles de gaz et permet l'élimination de l'excès de biomasse fixé sur les grains de matériau. Suivant l'invention, la vitesse de passage des fluides dans ce tube, ou ces tubes de transfert foncitonnant en gaz-lift, est avantageusement comprise entre 0,1 et 1 m/sec.;

- La deuxième enceinte, de dégazage, située au centre ou à la périphérie de la partie supérieure du réacteur, à flux hydraulique descendant, de large section, est caractérisée en ce que la vitesse de passage de l'eau de haut en bas y est inférieure à 5 cm/sec. et avantageusement comprise entre 0,3 et 1 cm/sec., le gaz s'échappant à la partie supérieure de l'enceinte de dégazage étant récupéré et éventuellement partiellement recyclé à la base du réacteur;

- La troisième enceinte, de décantation, se situant au centre de la partie supérieure du réacteur ou de part et d'autre de l'enceinte de dégazage, est caractérisée en ce qu'elle a une surface de 0,5 à 3 fois celle de l'enceinte de dégazage suivant le type de traitement réalisé, aérobie ou anaérobie, et la composition du liquide à traiter, et qu'elle est délimitée à sa partie inférieure par un fond tronconique concentrant le matériau décanté et autorisant une évacuation ponctuelle, avantageusement relié à la zone de réaction où se trouve le mélange triphasique fluidisé, par au moins un tube de recyclage assurant le recyclage du matériau granulaire dans la zone de fluidisation et également du débit nécessaire à la fluidisation.

L'appareil suivant l'invention permet ainsi d'assurer une expansion de 20 à 200 % du matériau granulaire par utilisation du débit de liquide à traiter entrant dans l'appareil et du recyclage naturel induit par les effets gaz-lift créés par la différence de densité entre le milieu triphasique de la zone de réaction et des tubes de transfert et le milieu biphasique obtenu après dégazage.

On a décrit ci-après quelques formes de réalisation de l'invention étant précisé qu'il s'agit uniquement d'exemples non limitatifs et que toutes autres dispositions pourraient être adoptées sans sortir du cadre de l'invention.

Au cours de cette description on se réfère aux dessins ci-joints sur lesquels:

Fig. 1 est une perspective arrachée d'une forme de réalisation de l'appareil suivant l'invention,

Fig. 2, 3 et 4 montrent schématiquement, les deux premières en perspective, la Fig. 4, en coupe, des exemples de réalisation relatifs aux moyens d'introduction des fluides dans l'appareil,

Fig. 5 et 6 sont des vues en coupe de la partie supérieure de l'appareil, suivant deux formes de réalisation,

Fig. 7 à 9 sont des vues schématiques, partielles, en coupe, la Fig. 7 de la partie supérieure du réacteur, les Fig. 8 et 9 de la partie inférieure de la zone de décantation.

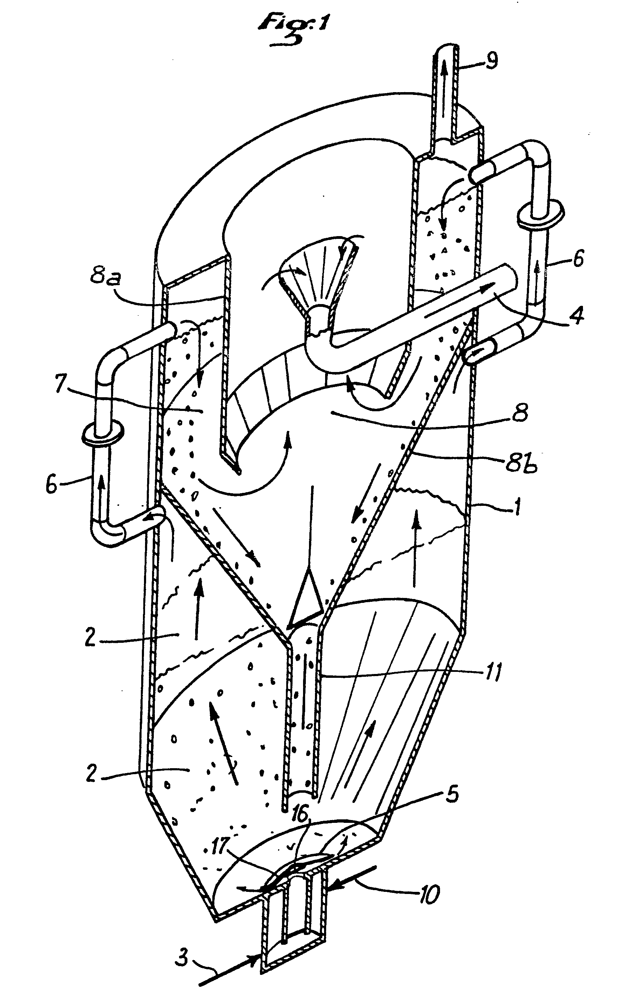

Comme il ressort de la Fig. 1 le réacteur 1 suivant l'invention de forme générale cylindro-conique comporte un lit fluidisé de matériau granulaire 2 à travers lequel sont amenés à circuler de bas en haut le liquide à traiter et le gaz de traitement ou le gaz généré au cours du traitement. L'eau à traiter est introduite dans l'appareil par la canalisation 3. L'eau traitée en sort par la canalisation 4.

Des moyens 5 d'introduction des fluides, eau et gaz, sont disposés à la base du réacteur de façon à ce que se constitue dans le réacteur un mélange triphasique: eau à traiter, gaz et matériau granulaire. Les grains de matériau granulaire utilisé ont une densité supérieure à celle de l'eau, de préférence comprise entre 1 et 2 et une taille effective comprise entre 0,1 et 5 mm. Deux matériaux spécifiques de granulométrie différente, de densités adaptées peuvent être utilisés conjointement et fluidisés soit en mélange soit en bicouche pour obvier aux difficultés de stabilité du lit dues à la remontée des bulles de gaz. La vitesse ascensionnelle appliquée dans la zone de fluidisation 2 varie entre 2 et 20 m/h en fonction de la composition de l'eau traitée et du débit de gaz produit ou injecté dans l'appareil.

Le mélange triphasique présent à la partie supérieure du lit fluidisé est véhiculé par le, ou les, tube(s) de transfert 6 constituant une enceinte de désenrobage des grains de matériau dans laquelle les vitesses cumulées en eau et en gaz sont comprises entre 0,1 et 1 m/sec et qui assurent l'élimination de l'excès de biomasse, fixé sur le matériau granulaire, dans l'enceinte de dégazage 7 située dans la partie supérieure du réacteur, à flux hydraulique descendant.

Dans cette enceinte de dégazage, de large section, la vitesse de l'eau, généralement inférieure à 1 cm/sec permet au mélange eau-matériau granulaire d'atteindre l'enceinte de décantation 8, délimitée par un cloisonnement cylindrique 8a coaxial, tandis que le gaz sortant de l'appareil par la canalisation 9 est éventuellement recyclé, par la canalisation 10, reliée à la canalisation 9, à la base du réacteur.

Le matériau récupéré au point bas de l'enceinte 8 de décantation peut être extrait et recyclé vers la zone de réaction par un système de pompage extérieur, mais, suivant une forme de réalisation préférée de l'invention, l'enceinte de décanatation 8 est munie d'un tube de recyclage naturel 11 prolongeant un cloisonnement conique 8b, du matériau granulaire vers la zone de réaction. Ce tube 11 est muni de moyens de contrôle du débit liquide de recyclage induit par les effets de gaz-lift dans la zone de réaction et les tubes de transfert, la vitesse dans le tube 11 étant limitée entre 0 et 2 m/sec.

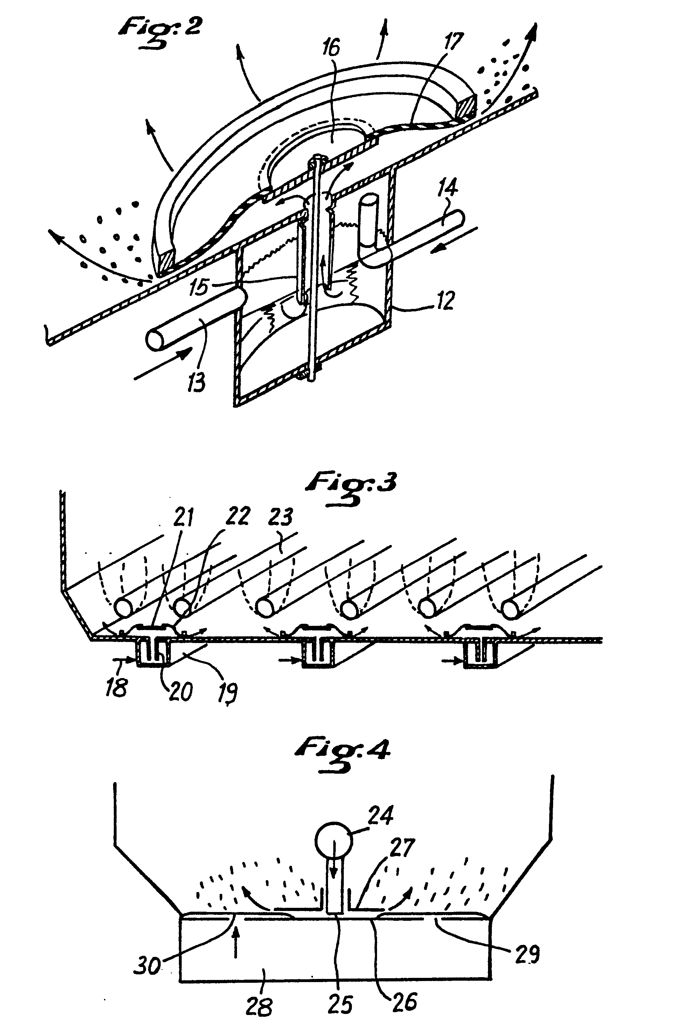

Comme le montre la Fig. 2, les moyens 5 d'introduction des fluides dans le réacteur sont constitués par une capacité d'entrée 12 dans laquelle arrivent l'eau à traiter par la canalisation 13 et le gaz par la canalisation 14. Cette capacité est munie d'une tubulure axiale 15, d'un diamètre compris par exemple entre 20 et 300 mm, percée d'orifices calibrés (non représentés) pour l'injection du gaz. Le jet des fluides sortant de cette tubulure heurte la plaque horizontale 16 par laquelle il est dévié; une membrane souple 17 formant clapet assurant l'étanchéité du système. L'écartement de la plaque horizontale disposée au-dessus de la tubulure d'injection des fluides est réglable en fonction du débit désiré. La membrane souple entourant la plaque horizontale est lestée par ses bords de façon à assurer la vitesse désirée d'éjection du mélange de fluide, entre 1 et 5 m/sec. En cas d'interruption de l'alimentation en fluide, la membrane 17 repose de façon étanche sur le fond du réacteur, l'effet clapet réalisé interdit alors toute pénétration du matériau dans le système.

Les orifices d'introduction de gaz dans la tubulure d'injection 15 sont calibrés de façon à créer une perte de charge d'équirépartition de 30 à 300 mm.

Suivant la forme de réalisation représentée à la Fig. 3, l'eau à traiter est introduite par des canalisations 18 dans des capacités 19, à tubulure axiale 20. Le jet sortant de cette tubulure heurte la plaque horizontale 21 entourée d'une membrane souple 22, le fonctionnement étant le même que celui décrit à propos de la forme de réalisation suivant la Fig. 8.

Les capacités 19 d'introduction de l'eau à traiter sont associées pour la formation du mélange triphasique, à des collecteurs d'air 23, comportant comme connu, des orifices à membrane déformable.

Dans la forme de réalisation conforme à l'exemple traité à la Fig. 4, les moyens d'introduction de l'eau à traiter consistent en une pluralité de collecteurs munis de buses 24 d'équirépartition présentant des orifices 25 de diamètre compris, avantageusement, entre 20 et 100 mm, libérant le jet liquide sur une plaque horizontale pouvant être constituée par le fond 26 du réacteur. Ces orifices sont coiffés par une membrane souple 27 formant clapet. Ces moyens d'introduction de l'eau à traiter sont associés à un ou plusieurs coffres à air 28 disposés au-dessous des buses d'injection de liquide, comportant des orifices calibrés 29 d'équirépartition de l'air de diamètre compris avantageusement entre 3 et 20 mm, munis de façon connue de membranes élastiques perforées ou poreuses 30.

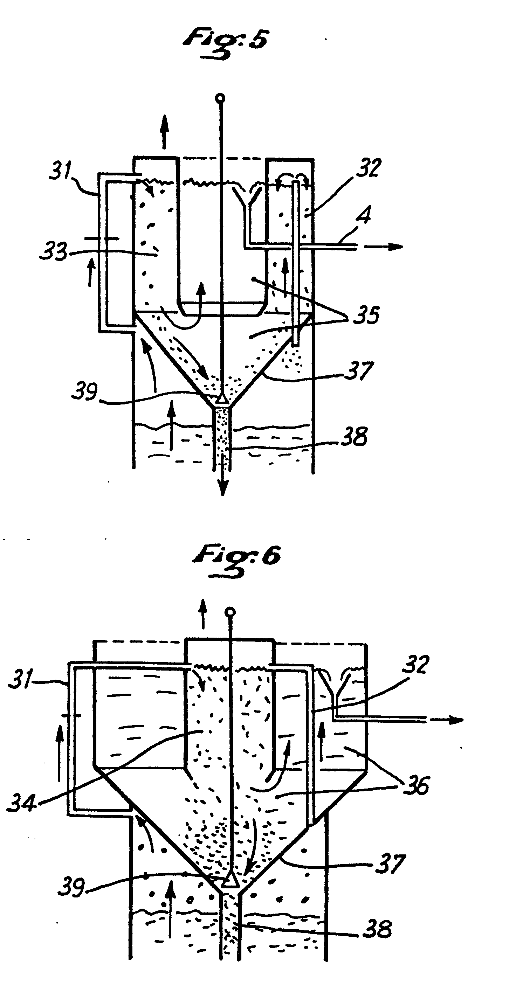

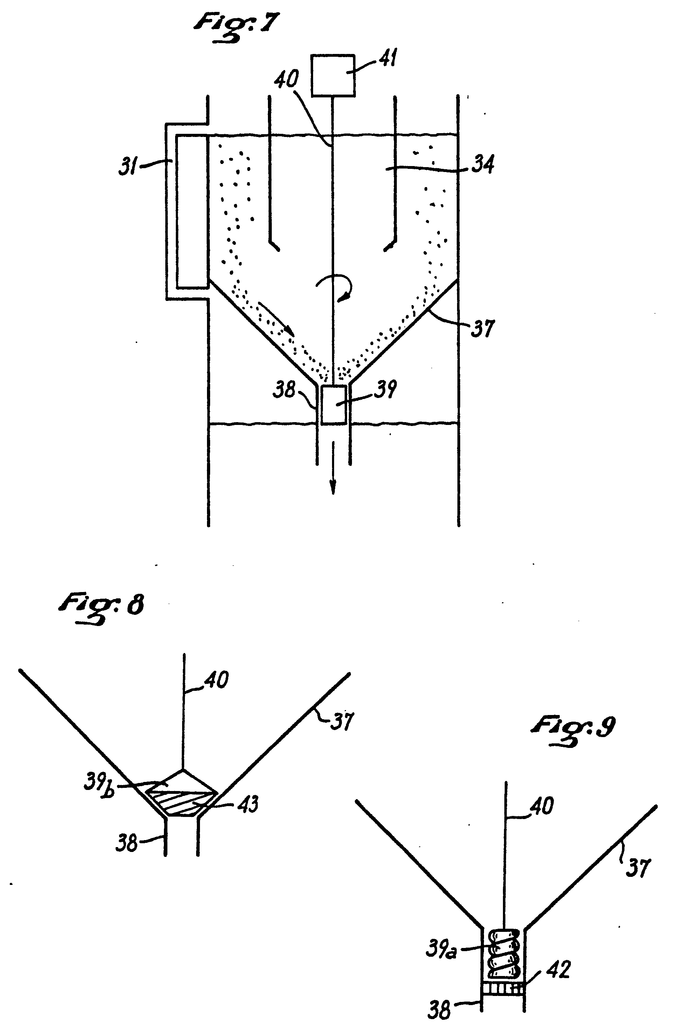

Ainsi qu'on le voit sur les Fig. 5 et 6, la partie supérieure du réacteur suivant l'invention comporte trois enceintes: une enceinte de désenrobage constituée par les tubes de transfert, extérieur 31 ou intérieur 32, une deuxième enceinte de dégazage, centrale 34 ou latérale 33 et une enceinte de décantation, centrale 35 ou latérale 36, délimitée à sa partie inférieure par un fond tronconique 37 comportant un tube de recyclage naturel 38 muni d'un moyen de réglage 39 du débit et assurant ainsi un écoulement permanent ou séquentiel.

Pour parfaire le désenrobage se produisant dans les tubes de transfert grâce aux effets de laminage hydropneumatique mais susceptible d'être insuffisant dans certains cas, on prévoit, conformément à l'invention, au niveau de l'orifice dont est muni le fond tronconique 37 et duquel part le tube de recyclage naturel 38 ou à l'intérieur de ce tube, un organe animé d'un mouvement de rotation à vitesse réglable.

Dans la forme de réalisation représentée à la Fig. 7, l'organe rotatif 39 est inclus dans le tube 38. Il est assujetti à un arbre 40 entraîné en rotation par un groupe moto-variateur 41, à une vitesse généralement comprise entre 10 et 200 t/mn.

De diamètre variable entre environ 100 et 400 mm, l'organe rotatif peut prendre les formes les plus diverses. Dans l'exemple traité à la Fig. 9, l'organe rotatif 39a est en forme de vis sans fin à un ou plusieurs filets et refoule le matériau sur une grille fixe de cisaillement 42.

Conformément à l'exemple traité à la Fig. 8 l'organe rotatif est situé au débouché du tube 38 et consiste en une roue conique 39b, dans laquelle sont pratiquées des rainures hélicoîdales 43.

Quelles que soient les formes que l'on peut adopter pour l'organe tournant, la présence de cet organe, dans les conditions relatées, permet, grâce à une action mécanique venant s'ajouter aux effets de laminage hydro-pneumatique auxquels est soumis le matériau granulaire, un désenrobage efficace dans tous les cas, de ce matériau, ledit organe jouant également un rôle prépondérant dans le contrôle, donc le réglage, du débit hydraulique du réacteur et le transfert du matériau dans la zone de réaction de l'appareil.

**Revendications**

1. Réacteur à lit fluidisé de matériau granulaire dans lequel le liquide à traiter par voie aérobie ou anaérobie s'écoule de bas en haut à travers le lit de matériau granulaire, ledit réacteur, comportant des moyens pour effectuer le dégazage du mélange triphasique présent et la séparation par décantation des grains de matériau avec recyclage de ce matériau dans la zone de fluidisation ainsi que des moyens pour recycler dans cette zone le débit liquide assurant la fluidisation et des moyens pour la reprise du liquide traité, caractérisé en ce qu'il est muni, à sa base, de moyens (5) pour l'introduction du ou des fluide(s), comportant au moins un orifice d'introduction du ou des fluide(s) libérant un jet sur au moins une plaque horizontale (16, 21) munie d'une membrane souple (17, 22) formant clapet et, à sa partie supérieure, de moyens (6, 31, 32) pour effectuer le désenrobage du matériau granulaire entraîné par le gaz introduit et/ou généré dans l'appareil.

2. Réacteur suivant la revendication 1, caractérisé en ce que les moyens pour l'introduction des fluides à la base du réacteur consistent en au moins une capacité d'entrée (12) comportant une tubulure axiale verticale (15) guidant le flux contre une plaque horizontale (16) de déviation du jet fluide, cette plaque de déviation étant entourée d'une membrane (17) élastique formant clapet.

3. Réacteur suivant l'une quelconque des revendications précédentes, caractérisé en ce que la ou les capacités d'entrée comportant une tubulure d'injection surmontée d'une plaque horizontale de déviation du jet munie d'une membrane souple est associée à un ou plusieurs collecteurs (23) comportant des orifices pour la diffusion du gaz tel que air, oxygène, ou air enrichi en oxygène, ce ou ces collecteurs étant disposés au-dessus de la plaque horizontale (21) de déviation du jet liquide.

4. Réacteur suivant la revendication 1, caractérisé en ce que les moyens pour l'introduction des fluides à la base du réacteur consistent en une pluralité de buses (24) d'équirépartition du liquide à traiter comportant des orifices (25) libérant le jet liquide sur une plaque horizontale qui peut être constituée par le fond (26) du réacteur et protégée par une membrane souple lestée (27) formant clapet, ces buses d'introduction de liquide étant associées à un dispositif de diffusion d'air consistant en des coffres à air (28) disposés au-dessous des buses d'injection de liquide et comportant des orifices calibrés (29) d'équirépartition, munis comme connu, de membranes souples déformables, perforées ou poreuses (30).

5. Réacteur suivant l'une quelconque des revendications précédentes, caractérisé en ce que les moyens pour effectuer le désenrobage du matériau granulaire entraîné par le gaz, consistent en au moins un tube de transfert intérieur (32) ou extérieur (31), à diaphragme réglable.

6. Réacteur suivant l'une quelconque des revendications précédentes, caractérisé en ce que les moyens pour effectuer le dégazage du mélange triphasique consistent en au moins une enceinte centrale (34) ou latérale (33) de large section et à flux hydraulique descendant.

7. Réacteur suivant l'une quelconque des revendications précédentes, caractérisé en ce que les moyens pour effectuer la séparation par décantation des grains du matériau granulaire consistent en au moins une enceinte (centrale 35 ou latérale 36), délimitée à sa partie inférieure par un fond tronconique (37), de surface comprise entre 0,5 et 3 fois la surface de l'enceinte de dégazage et munie d'au moins un tube (38) de recyclage du matériau dans la zone de réaction.

8. Réacteur suivant la revendication 7, caractérisé en ce que le tube de recyclage du matériau véhicule également le débit de recyclage nécessaire à la fluidisation du matériau du réacteur, ce débit de recyclage étant obtenu par les effets de gaz-lift dans la zone de réaction et dans les tubes de transfert et réglé par un moyen de contrôle (39) assurant un écoulement permanent et/ou séquentiel.

9. Réacteur à lit fluidisé de matériau granulaire suivant les revendications 7 et 8, caractérisé en ce que, pour renforcer l'action de désenrobage du matériau granulaire, tout en permettant le contrôle du débit recyclé du fond de la zone de décantation et coopérant au recyclage du matériau granulaire dans la zone de réaction de l'appareil, il comporte un organe (39, 39a, 39b) animé d'un mouvement de rotation de vitesse réglable, disposé, soit au débouché du tube (38) de recyclage du matériau granulaire dans la zone de réaction, soit à l'intérieur de ce tube.

12. Réacteur à lit fluidisé de matériau granulaire suivant la revendication 9, caractérisé en ce que l'organe rotatif (39b) extérieur au tube (38) consiste en une roue conique, avantageusement munie d'une ou plusieurs rainures hélicoïdales (43).

**Patentansprüche**

1. Reaktor mit Wirbelbett aus granularem Material, in dem die aerob oder anaerob zu behandelnde Flüssigkeit von unten nach oben durch das Bett aus granularem Material strömt, wobei der Reaktor Einrichtungen für die Entgasung des vorhandenen Dreiphasengemisches und für die Trennung durch Dekantieren der Körner des Materials unter Rückführung dieses Materials in die Fluidisierungszone ebenso wie Einrichtungen für die Rückführung der die Fluidisierung gewährleistenden Flüssigkeitsmenge in diese Zone, und Einrichtungen für die Wiederaufnahme der behandelten Flüssigkeiten umfaßt, dadurch gekennzeichnet, daß er an seiner Basis Einrichtungen (5) für die Einleitung des Fluids oder der Fluide mit wenigstens einer Öffnung aufweist, durch die ein Strahl auf wenigstens eine horizontale Platte (16, 21) freigegeben wird, die mit einer nachgiebigen, eine Klappe bildenden Membran (17, 22) ausgestattet ist, und daß er an seinem oberen Abschnitt Einrichtungen (6, 31, 32) für die Abscheidung des granularen Materials, das von dem in die Vorrichtung eingeleiteten und/oder in der Vorrichtung erzeugten Gas mitgeführt wurde, aufweist.

2. Reaktor nach Anspruch 1, dadurch gekennzeichnet, daß die Einrichtungen für die Einleitung der Fluide an der Basis des Reaktors aus wenigstens einem Eintrittsraum (12) bestehen, der ein axiales vertikales Rohr (15) umfaßt, durch das der Fluidstrom gegen eine horizontale Platte (16) für die Ablenkung des Fluidstrahls geleitet wird, wobei die Ablenkplatte von einer elastischen, eine Klappe bildenden Membran (17) umgeben ist.

3. Reaktor nach einem der vorhergehenden Ansprüche, dadurch gekennzeichnet, daß der Eintrittsraum oder die Eintrittsräume, die ein Injektionsrohr aufweisen, das von einer eine nachgiebige Membran aufweisenden horizontalen Platte zur Strahlablenkung überdeckt ist, an einen oder mehrere Sammler (23) angeschlossen sind, welche Öffnungen für die Ausbreitung des Gases wie etwa Luft, Sauerstoff oder mit Sauerstoff angereicherte Luft aufweisen und oberhalb der horizontalen Platte (21) zur Ablenkung des Flüssigkeitsstrahls angeordnet sind.

4. Reaktor nach Anspruch 1, dadurch gekennzeichnet, daß die Einrichtungen für die Einleitung der Fluide an der Basis des Reaktors aus einer Mehrzahl von Düsen (24) zur gleichmäßigen Verteilung der zu behandelnden Flüssigkeit bestehen, die jeweils Öffnungen (25) aufweisen, die den Flüssigkeitsstrahl auf eine horizontale Platte freigeben, die durch den Boden (26) des Reaktors gebildet und durch eine belastete nachgiebige, eine Klappe bildende Membran (27) geschützt werden kann, wobei die Düsen für die Einleitung der Flüssigkeit mit einer Luftdiffusionsvorrichtung verbunden sind, die aus Luftkammern (28) besteht, die unterhalb der Düsen für die Injektion der Flüssigkeit angeordnet sind und kalibrierte Öffnungen (29) zur gleichmäßigen Verteilung aufweisen, wobei die Öffnungen in an sich bekannter Weise verformbare, perforierte oder poröse nachgiebige Membranen (30) aufweisen.

5. Reaktor nach einem der vorhergehenden Ansprüche, dadurch gekennzeichnet, daß die Einrichtungen für die Abscheidung des von dem Gas mitgeführten granularen Materials aus wenigstens einem inneren Überleitungsrohr (32) oder einem äußeren Überleitungsrohr (31) mit regelbarem Diaphragma bestehen.

6. Reaktor nach einem der vorhergehenden Ansprüche, dadurch gekennzeichnet, daß die Einrichtungen für die Entgasung des Dreiphasengemisches aus wenigstens einem zentral angeordneten Behälter (34) oder seitlich angeordneten Behälter (33) mit weitem Querschnitt und mit sinkendem hydraulischen Fluidstrom besteht.

7. Reaktor nach einem der vorhergehenden Ansprüche, dadurch gekennzeichnet, daß die Einrichtungen für die Trennung durch Dekantieren der Körner des granularen Materials aus wenigstens einem (zentral angeordneten 35 oder seitlich angeordneten 36) Behälter besten, der an seiner Unterseite von einem kegelstumpfförmigen Boden (37) begrenzt wird, dessen Oberfläche das 0,5 bis 3fache der Oberfläche des Entgasungsraumes beträgt, und der wenigstens ein Rohr (38) für die Rückführung des Materials in die Reaktionszone aufweist.

8. Reaktor nach Anspruch 7, dadurch gekennzeichnet, daß das Rohr für die Rückführung des Materials gleichzeitig auch die für die Fluidisierung des Materials im Reaktor notwendige Rückfuhrmenge transportiert, wobei die Rückfuhrmenge durch das in der Reaktionszone und in den Überleitungsrohren aufsteigende Gas erhalten und durch eine Steuereinrichtung (39), die einen gleichbleibenden und/oder sequentiellen Abfluß gewährleistet, geregelt wird.

9. Reaktor mit Wirbelbett aus granularem Material nach Anspruch 7 und 8, dadurch gekennzeichnet, daß er zur Verbesserung der Abscheidung des granularen Materials eine rotierende Einrichtung (39, 39a, 39b) umfaßt, deren Rotationsgeschwindigkeit reguliert werden kann und die entweder an der Mündung des Rohrs (38) für die Rückführung des granularen Materials in die Reaktionszone oder im Inneren des Rohres angeordnet ist, wobei gleichzeitig die Menge, die von dem Boden der Dekantierungszone zurückgeführt wird und zur Rückführung des granularen Materials in die Reaktionszone der Vorrichtung beiträgt, gesteuert werden kann.

10. Reaktor mit Wirbelbett aus granularem Material nach Anspruch 9, dadurch gekennzeichnet, daß die in dem Rohr (38) angeordnete Rotationseinrichtung (39) im wesentlichen zylindrisch ausgebildet ist.

11. Reaktor mit Wirbelbett aus granularem Material nach Anspruch 9, dadurch gekennzeichnet, daß die in dem Rohr (38) angeordnete Rotationseinrichtung (39a) als Schnecke ausgebildet ist und in vorteilhafter Weise mit einem fest angeordneten Schubgitter (42), das nach der Schnecke in dem Rohr angeordnet ist, zusammenwirkt.

12. Reaktor mit Wirbelbett aus granularem Material nach Anspruch 9, dadurch gekennzeichnet, daß die außerhalb des Rohres (38) angeordnete Rotationseinrichtung (39b) aus einem konischen Rad besteht, das in vorteilhafter Weise eine oder mehrere spiralförmige Nuten (43) aufweist.

## Claims

1. A reactor having a fluidized bed of granular material in which the liquid to be treated by aerobic or anaerobic process flows from the bottom upwards through the bed of granular material, the said reactor which includes means of effecting degassing of the threephase mixture present and separation by decantation of the grains of material with recycling of this material into the fluidization zone as well as means of recycling the liquid flow into this zone to ensure the fluidization and means of recovery of the treated liquid, being characterized in that it is equipped at its base with means (5) of introduction of the fluid or fluids, including at least one orifice for introduction of the fluid or fluids which releases a jet against at least one horizontal plate (16, 21) equipped with a flexible membrane (17, 22) forming a clack valve and at the upper portion of it with means (6, 31, 32) of effecting stripping of the granular material carried along by the gas introduced and/or generated in the apparatus.

2. A reactor as in Claim 1, characterized in that the means of introduction of the fluids at the base of the reactor consist of at least one input volume (12) which includes a vertical axial nozzle (15) to guide the flow against a horizontal plate (16) for deviation of the fluid jet, this deviator plate being surrounded by an elastic membrane (17) forming a clack valve.

3. A reactor as in either of the preceding Claims, characterized in that the inlet volume or volumes which include(s) an injector nozzle surmounted by a horizontal plate for deviation of the jet, equipped with a flexible membrane, is associated with one or more collectors (23) having orifices for the diffusion of the gas such as air, oxygen or air enriched with oxygen, this or these collector(s) being arranged above the horizontal plate (21) for deviation of the liquid jet.

4. A reactor as in Claim 1, characterized in that the means of introduction of the fluids at the base of the reactor consist of a plurality of nozzles (24) for equal distribution of the liquid to be treated, which include orifices (25) which release the liquid jet against a horizontal plate which may consist of the bottom (26) of the reactor and be protected by a ballasted flexible membrane (27) forming a clack valve, these nozzles for introduction of liquid being associated with a device for diffusion of air consisting of air chests (28) arranged below the liquid injector nozzles and including calibrated orifices (29) for equal distribution, equipped as known with deformable, perforated or porous flexible membranes (30).

5. A reactor as in any one of the preceding Claims, characterized in that the means of effecting stripping of the granular material carried along by the gas consist of at least one internal (32) or external (31) transfer tube with an adjustable diaphragm.

6. A reactor as in any one of the preceding Claims, characterized in that the means of effecting degassing of the threephase mixture consist of at least one central (34) or lateral (33) enclosure of wide area and descending hydraulic flow.

7. A reactor as in any one of the preceding Claims, characterized in that the means of effecting separation of the grains of granular material by decantation consist of at least one enclosure (central 35 or lateral 36) bounded at the lower portion of it by a frustoconical bottom (37) of area lying between 0,5 and 3 times the area of the degassing enclosure and equipped with at least one tube (38) for recycling the material into the reaction zone.

8. A reactor as in Claim 7, characterized in that the tube for recycling the material likewise conveys the recycling flow necessary to the fluidization of the material in the reactor, this recycling flow being obtained by the effects of the gas lift in the reaction zone and in the transfer tubes and regulated by a means of control (39) which ensures a permanent and/or sequential flow.

9. A reactor having a fluidized bed of granular material as in Claims 7 and 8, characterized in that for reinforcing the action of stripping the granular material whilst enabling control of the flow recycled from the bottom of the decantation zone and cooperating with the recycling of the granular material into the reaction zone of the apparatus, it includes a member (39, 39a, 39b) endowed with a rotary motion at variable speed and arranged either at the outlet from the tube (38) for recycling the granular material into the reaction zone or inside this tube.

10. A reactor having a fluidized bed of granular material as in Claim 9, characterized in that the rotary member (39) enclosed in the tube (38) is of generally cylindrical shape.

11. A reactor having a fluidized bed of granular material as in Claim 9, characterized in that the rotary member (39a) enclosed in the tube (38) is in the form of an endless screw and advantageously cooperates with a fixed shearing grating (42) which follows it in the tube.

12. A reactor having a fluidized bed of granular material as in Claim 9, characterized in that the rotary member (39b) outside the tube (38) consists of a conical wheel advantageously equipped with one or more spiral grooves (43).

Fig.1

*Fig: 2*

16   17

14

15   12

13

*Fig: 3*

21   22   23

18   20   19

*Fig. 4*

24

27

30   29

28   25   26

11

*Fig. 5*

*Fig. 6*

**Fig. 7**

**Fig. 8**

**Fig. 9**